# NEUE EUROPÄISCHE PATENTSCHRIFT

(11) **EP 1 517 934 B2**
(45) Veröffentlichungstag und Bekanntmachung des Hinweises auf die Entscheidung über den Einspruch: **11.03.2015**
(45) Hinweis auf die Patenterteilung: 21.06.2006
(21) Anmeldenummer: 03760638.1
(22) Anmeldetag: 18.06.2003
(51) Int. Cl.: C08G 18/08, C08G 18/66, C09D 175/06, C09D 17/00

(54) **FESTE PIGMENTZUBEREITUNGEN, ENTHALTEND ANIONISCHE UND NICHTIONISCHE OBERFLÄCHENAKTIVE ADDITIVE**
SOLID PIGMENT PREPARATIONS CONTAINING ANIONIC AND NON-IONIC SURFACE-ACTIVE ADDITIVES
COMPOSITIONS PIGMENTAIRES SOLIDES CONTENANT DES ADDITIFS TENSIOACTIFS ANIONIQUES OU NON IONIQUES

(30) Priorität: 20.06.2002 DE 10227657
(43) Veröffentlichungstag der Anmeldung: 30.03.2005
(73) Patentinhaber: BASF SE, 67056 Ludwigshafen (DE)
(72) Erfinder: REISACHER, Hansulrich, 67133 Maxdorf (DE); STOHR, Andreas, 67251 Freinsheim (DE); KLOPP, Ingo, 67256 Weisenheim (DE); GONZALEZ GOMEZ, Juan Antonio, 67063 Ludwigshafen (DE)
(74) Vertreter: Ellwanger, Arndt
(86) Internationale Anmeldenummer: PCT/EP2003/006409
(87) Internationale Veröffentlichungsnummer: WO 2004/000903

(56) Entgegenhaltungen:
- EP-A- 0 438 090
- EP-A1- 1 103 173
- EP-A2- 1 167 452
- EP-A2- 1 174 473
- EP-B1- 1 169 394
- WO-A1-00/47681
- WO-A1-99/55762
- DE-A1- 3 914 384
- JP-A- H11 124 527
- JP-K1- S5 188 523
- US-A- 3 067 053
- US-A- 4 127 422
- US-A- 4 156 616
- US-A- 4 443 263
- US-A- 4 456 485
- US-A- 4 871 536
- US-A- 4 872 916
- US-A- 4 909 853
- US-A- 4 927 463
- US-A- 4 986 851
- US-A- 5 279 654
- US-A- 5 466 482
- US-A- 6 110 266
- US-B1- 6 239 201

## Beschreibung

### Beschreibung

Die vorliegende Erfindung betrifft feste Pigmentzubereitungen in Form von Granulaten mit einer mittleren Korngröße von 50 bis 5000 µm enthaltend als wesentliche Bestandteile
(A) 60 bis < 90 Gew.-% mindestens eines Pigments,
(B) > 10 bis 40 Gew.-% mindestens eines anionischen oberflächenaktiven Additivs auf der Basis von sauren Phosphorsäure-, Phosphonsäure-, Schwefelsäure- und/oder Sulfonsäureestern von Polyalkylenoxiden oder von Umsetzungsprodukten von Alkylenoxiden mit aliphatischen Alkoholen, Phenol oder Naphthol, das jeweils gewünschtenfalls alkylsubstituiert sein kann, mit aliphatischen oder aromatischen Aminen, aliphatischen Carbonsäuren oder Carbonsäureamiden oder den Salzen dieser Ester, wobei der Anteil des phoshorhaltigen Additivs in einem Gemisch von phosphor- und schwefelhaltigen Additiven mindestens 50 Gew.-% beträgt, und
(C) > 0 bis < 30 Gew.-% mindestens eines nichtionischen oberflächenaktiven Additivs auf der Basis von Polyethern.

Weiterhin betrifft die Erfindung die Herstellung dieser Pigmentzubereitungen und ihre Verwendung zum Einfärben von hochmolekularen organischen und anorganischen Materialien.

Zur Pigmentierung von flüssigen Systemen, wie Anstrichmitteln, Lacken, Dispersions- und Druckfarben, werden üblicherweise Pigmentpräparationen eingesetzt, die Wasser, organisches Lösungsmittel oder Mischungen davon enthalten. Neben anionischen, kationischen, nichtionischen oder amphoteren Dispergiermitteln müssen diesen Pigmentpräparationen in der Regel weitere Hilfsmittel, wie Eintrocknungsverhinderer, Mittel zur Erhöhung der Gefrierbeständigkeit, Verdicker und Antihautmittel, zur Stabilisierung zugesetzt werden.

Es bestand Bedarf an neuen Pigmentzubereitungen, die in ihren koloristischen Eigenschaften und der Dispergierbarkeit den flüssigen Fräparationen vergleichbar sind, jedoch nicht die genannten Zusätze erfordern und leichter zu handhaben sind. Durch einfaches Trocknen der flüssigen Präparationen können jedoch keine festen Pigmentzubereitungen erhalten werden, die vergleichbare Anwendungseigenschaften aufweisen.

In der DE-A-39 14 384 werden Pigmentzubereitungen beschrieben, die neben dem feinteiligen Pigment (mindestens 3,9 Gew.-%) basische Pigmentderivate und (maximal 9,5 Gew.-%) Phosphorsäureester von Polyethylenglykolen und von Alkylenoxidaddukten an Oxo- und Fettalkohole enthalten und zur Herstellung von fließfähigen Druckfarben und Stammpasten eingesetzt werden.

In der EP-A-1 103 173 werden u.a. anionisch modifizierte Phenol/ Styrol-Polyglykolether als Dispergiermittel für feste Pigmentzubereitungen zur Saatguteinfärbung genannt. Die explizit offenbarten Pigmentzubereitungen enthalten jedoch nur nichtionische Dispergiermittel auf der Basis von Umsetzungsprodukten von hydriertem Ricinusöl mit Ethylenoxid.

Aus der DE-A-100 35 494 sind feste Präparationen von Metallkomplexpigmenten mit eingelagertem Melamin bekannt. Als mögliche Dispergiermittel werden anionische, kationische, amphotere und nichtionische Dispergiermittel aufgeführt, explizit als Dispergiermittel eingesetzt wird ein sulfatierter ethoxylierter Fettalkohol.

In der DE-A-199 05 269 werden feste Pigmentzubereitungen beschrieben, die Dispergiermittel auf Basis nichtionisch modifizierter Phenol/Styrol-Polyglykolether oder Mischungen von ethoxyliertem Ricinusöl mit untergeordneten Mengen von diesen Ethern oder von Phosphonsäureestern und zusätzlich stets einen Verdicker auf Basis von gegebenenfalls teilhydriertem Polyvinylalkohol oder von anionischen Polyhydroxyverbindungen enthalten und zur Pigmentierung wasserbasierenden Anwendungsmedien eingesetzt werden.

Die EP-A-256 427 betrifft Pigmentzubereitungen für Kosmetikartikel, die Mischungen von anionischen Dispergiermitteln auf Basis von Alkylglykolethersulfaten und Phosphorsäureestern von gegebenenfalls oxethylierten Fettalkoholen, in denen die Sulfate stets im Überschuß vorliegen, enthalten.

Aus den EP-A-84 645 und 403 917 sind hochkonzentrierte, feste Pigmentzubereitungen für die Pigmentierung von wäßrigen, alkoholischen und wäßrig-alkoholischen Lacken und Druckfarben bekannt, die bis zu 30 Gew.-% eines Additivs auf der Basis von Umsetzungsprodukten von mindestens zweiwertigen Aminen mit Propylenoxid und Ethylenoxic, jedoch kein anionisches Additiv enthalten.

In den US-A-4 056 402 und 4 127 422 werden trockene, nicht staubende Pigmentzubereitungen für wasserbasierende Beschichtungssysteme beschrieben. Diese Pigmentzubereitungen enthalten jedoch neben nichtionischen Dispergiermitteln als wesentlichen Bestandteil mindestens 10 Gew.-% wasserlösliche Celluloseether bzw. wasserdispergierbare Polyvinylverbindungen und unterscheiden sich daher von den erfindungsgemäßen Pigmentzubereitungen.

Schließlich sind aus der älteren deutschen Patentanmeldung 102 04 583.6 Pigmentzubereitungen bekannt, die 60 bis 90 Gew.-% eines Pigments, 10 bis 40 Gew.-% eines nichtionischen oberflächenaktiven Additivs auf der Basis von Polyethern und 0,1 bis 10 Gew.-% eines anionischen oberflächenaktiven Additivs auf der Basis von Sulfonaten oder Sulfaten enthalten.

Der Erfindung lag die Aufgabe zugrunde, feste Pigmentzubereitungen bereitzustellen, die sich durch insgesamt vorteilhafte Anwendungseigenschaften, insbesondere hohe Farbstärke und besonders leichte Dispergierbarkeit (Einrührbarkeit, "Stir-in"-Verhalten) in Anwendungsmedien verschiedenster Art, auszeichnen.

Demgemäß wurden Pigmentzubereitungen in Form von Granulaten mit einer mittleren Korngröße von 50 bis 5000 µm gefunden, welche als wesentliche Bestandteile
(A) 60 bis < 90 Gew.-% mindestens eines Pigments,
(B) > 10 bis 40 Gew.-% mindestens eines anionischen oberflächenaktiven Additivs auf der Basis von sauren Phosphorsäure-, Phosphonsäure-, Schwefelsäure- und/oder Sulfonsäureestern von Polyalkylenoxiden oder von Umsetzungsprodukten von Alkylenoxiden mit aliphatischen Alkoholen, Phenol oder Naphthol, das jeweils gewünschtenfalls alkylsubstituiert sein kann, mit aliphatischen oder aromatischen Aminen, aliphatischen Carbonsäuren oder Carbonsäureamiden oder den Salzen dieser Ester, wobei der Anteil des phoshorhaltigen Additivs in einem Gemisch von phosphor- und schwefelhaltigen Additiven mindestens 50 Gew.-% beträgt, und
(C) > 0 bis < 30 Gew.-% mindestens eines nichtionischen oberflächenaktiven Additivs auf der Basis von Polyethern.

Außerdem wurde ein Verfahren zur Herstellung der Pigmentzubereitungen gefunden, welches dadurch gekennzeichnet ist, daß man das Pigment (A) zunächst in wäßriger, zumindest einen Teil der Additive (B) und/oder (C) enthaltenden Suspension einer Naßzerkleinerung unterwirft und die Suspension dann, gegebenenfalls nach Zugabe der restlichen Menge Additiv (B) und/oder (C), trocknet.

Weiterhin wurde ein Verfahren zur Einfärbung von hochmolekularen organischen und anorganischen Materialen gefunden, welches dadurch gekennzeichnet ist, daß man die Pigmentzubereitungen durch Einrühren oder Schütteln in diese Materialien einträgt.

Die erfindungsgemäßen Pigmentzubereitungen enthalten als wesentliche Bestandteile das Pigment (A) und das anionische oberflächenaktive Additiv (B) und das nichtionische oberflächenaktive Additiv (C).

Als Komponente (A) können in den erfindungsgemäßen Pigmentzubereitungen organische oder anorganische Pigmente enthalten sein. Selbstverständlich können die Pigmentzubereitungen auch Mischungen verschiedener organischer oder verschiedener anorganischer Pigmente oder Mischungen von organischen und anorganischen Pigmenten enthalten.

Die Pigmente liegen in feinteiliger Form vor. Die Pigmente haben dementsprechend üblicherweise mittlere Teilchengrößen von 0,1 bis 5 µm.

Bei den organischen Pigmenten handelt es sich üblicherweise um organische Bunt- und Schwarzpigmente. Anorganische Pigmente können ebenfalls Farbpigmente (Bunt-, Schwarz- und Weißpigmente) sowie Glanzpigmente und die üblicherweise als Füllstoffe eingesetzten anorganischen Pigmente sein.

Im folgenden seien als Beispiele für geeignete organische Farbpigmente genannt:

| | |
|---|---|
| - Monoazopigmente: | C.I. Pigment Brown 25; |
| | C.I. Pigment Orange 5, 13, 36, 38, 64 und 67; |
| | C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251; |
| | C.I. Pigment Yellow 1, 3, 62, 65, 73, 74, 97, 120, 151, 154, 168, 181, 183 und 191; |
| | C.I. Pigment Violet 32; |
| - Disazopigmente: | C.I. Pigment Orange 16, 34, 44 und 72; |
| | C.I. Pigment Yellow 12, 13, 14, 16, 17, 81, 83, 106, 113, 126, 127, 155, 174, 176, 180 und 188; |
| - Disazokondensationspigmente: | C.I. Pigment Yellow 93, 95 und 128; |
| | C.I. Pigment Red 144, 166, 214, 220, 221, 242 und 262; |
| | C.I. Pigment Brown 23 und 41; |
| - Anthanthronpigmente: | C.I. Pigment Red 168; |
| - Anthrachinonpigmente: | C.I. Pigment Yellow 147, 177 und 199; |
| | C.I. Pigment Violet 31; |
| - Anthrapyrimidinpigmente: | C.I. Pigment Yellow 108; |
| - Chinacridonpigmente: | C.I. Pigment Orange 48 und 49; |
| | C.I. Pigment Red 122, 202, 206 und 209; |
| | C.I. Pigment Violet 19; |
| - Chinophthalonpigmente: | C.I. Pigment Yellow 138; |
| - Diketopyrrolopyrrolpigmente: | C.I. Pigment Orange 71, 73 und 81; |
| | C.I. Pigment Red 254, 255, 264, 270 und 272; |
| - Dioxazinpigmente: | C.I. Pigment Violet 23 und 37; |
| | C.I. Pigment Blue 80; |
| - Flavanthronpigmente: | C.I. Pigment Yellow 24; |
| - Indanthronpigmente: | C.I. Pigment Blue 60 und 64; |
| - Isoindolinpigmente: | C.I. Pigment Orange 61 und 69; |
| | C.I. Pigment Red 260; |
| | C.I. Pigment Yellow 139 und 185; |
| - Isoindolinonpigmente: | C.I. Pigment Yellow 109, 110 und 173; |
| - Isoviolanthronpigmente: | C.I. Pigment Violet 31; |
| - Metallkomplexpigmente: | C.I. Pigment Red 257; |
| | C.I. Pigment Yellow 117, 129, 150, 153 und 177; |
| | C.I. Pigment Green 8; |
| - Perinonpigmente: | C.I. Pigment Orange 43; |
| | C.I. Pigment Red 194; |
| - Perylenpigmente: | C.I. Pigment Black 31 und 32; |
| | C.I. Pigment Red 123, 149, 178, 179, 190 und 224; |
| | C.I. Pigment Violet 29; |
| - Phthalocyaninpigmente: | C.I. Pigment Blue 15, 15:1, 15:2, 15:3, 15:4, 15:6 und 16; |
| | C.I. Pigment Green 7 und 36; |
| - Pyranthronpigmente: | C.I. Pigment Orange 51; |
| | C.I. Pigment Red 216; |
| - Pyrazolochinazolonpigmente: | C.I. Pigment Orange 67; |
| | C.I. Pigment Red 251; |
| - Thioindigopigmente: | C.I. Pigment Red 88 und 181; |
| | C.I. Pigment Violet 38; |
| - Triarylcarboniumpigmente: | C.I. Pigment Blue 1, 61 und 62; |
| | C.I. Pigment Green 1; |
| | C.I. Pigment Red 81, 81:1 und 169; |
| | C.I. Pigment Violet 1, 2, 3 und 27; |
| - C.I. Pigment Black 1 (Anilinschwarz); | |
| - C.I. Pigment Yellow 101 (Aldazingelb); | |
| - C.I. Pigment Brown 22. | |
| Geeignete anorganische Farbpigmente sind z.B.: | |
| - Weißpigmente: | Titandioxid (C.I. Pigment White 6), Zinkweiß, Farbenzinkoxid; Zinksulfid, |
| | Lithopone; |
| - Schwarzpigmente: | Eisenoxidschwarz (C.I. Pigment Black 11), |
| | Eisen-Mangan-Schwarz, Spinellschwarz (C.I. Pigment Black 27); Ruß (C.I. Pigment Black 7); |
| - Buntpigmente: | Chromoxid, Chromoxidhydratgrün; Chromgrün (C.I. Pigment Green 48); Cobaltgrün (C.I. Pigment Green 50); Ultramaringrün; |
| | Kobaltblau (C.I. Pigment Blue 28 und 36; C.I. Pigment Blue 72); Ultramarinblau; Manganblau; |
| | Ultramarinviolett; Kobalt- und Manganviolett; |
| | Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104); Ultramarinrot; |
| | Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange; |
| | Cersulfid (C.I. Pigment Orange 75); Eisenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34); Bismutvanadat (C.I. Pigment Yellow 184). |

Als Beispiele für üblicherweise als Füllstoffe eingesetzte anorganische Pigmente seien transparentes Siliciumdioxid, Quarzmehl, Aluminiumoxid, Aluminiumhydroxid, natürliche Glimmer, natürliche und gefällte Kreide und Bariumsulfat genannt.

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid- und Glimmerplättchen genannt.

Als Komponente (B) enthalten die erfindungsgemäßen Pigmentzubereitungen mindestens ein anionisches oberflächenaktives Additiv auf der Basis von sauren Phosphorsäure-, Phosphonsäure-, Schwefelsäure- und/oder Sulfonsäureestern von Polyalkylenoxiden oder von Umsetzungsprodukten von Alkylenoxiden mit aliphatischen Alkoholen, Phenol oder Naphthol, das jeweils gewünschtenfalls alkylsubstituiert sein kann, mit aliphatischen oder aromatischen Aminen, aliphatischen Carbonsäuren oder Carbonsäureamiden oder den Salzen dieser Ester, wobei der Anteil an phosphorhaltigem Additiv in einem Gemisch von phosphor- und schwefelhaltigem Additiv mindestens 50 Gew.-% beträgt.

Erfindungsgemäß soll dabei unter dem Begriff Alkylenoxid auch arylsubstituiertes Alkylenoxid, insbesondere phenylsubsitutiertes Ethylenoxid, verstanden werden.

Edukte für die Additive (B) können ungemischte Polyalkylenoxide, bevorzugt C₂-C₄-Alkylenoxide und phenylsubsitutierte C₂-C₄-Alkylenoxide, insbesondere Polyethylenoxide, Polypropylenoxide und Poly(phenylethylenoxide), vor allem Blockcopolymere, insbesondere Polypropylenoxid- und Polyethylenoxidblöcke oder Poly(phenylethylenoxid)- und Polyethylenoxidblöcke aufweisende Polymere, und auch statistische Copolymere dieser Alkylenoxide sein.

Diese Polyalkylenoxide können durch Polyaddition der Alkylenoxide an Startermoleküle, wie an gesättigte oder ungesättigte aliphatische Alkohole, Phenol oder Naphthol, das jeweils durch Alkyl, insbesondere C₁-C₁₂-Alkyl, vorzugsweise C₄-C₁₂- bzw. C₁-C₄-Alkyl, substituiert sein kann, gesättigte oder ungesättigte aliphatische und aromatische Amine, gesättigte oder ungesättigte aliphatische Carbonsäuren und Carbonsäureamide hergestellt werden. Üblicherweise werden 1 bis 300 mol, bevorzugt 3 bis 150 mol, Alkylenoxid je mol Startermolekül eingesetzt.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol (Cetylalkohol), 2-Hexyldecanol, Heptadecanol, Octadecanol (Stearylalkohol), 2-Heptylundecanol, 2-Octyldecanol, 2-Nonyltridecanol, 2-Decyltetradecanol, Oleylalkohol und 9-Octadecenol sowie auch Mischungen dieser Alkohole, wie C₈/C₁₀-. C₁₃/C₁₅- und C₁₆/C₁₈-Alkohole, und Cyclopentanol und Cyclohexanol genannt. Von besonderem Interesse sind die gesättigten oder ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mₙ von 200 bis 5000 auf.

Als Beispiele für die obengenannten aromatischen Alkohole seien neben unsubstituiertem Phenol und α- und β-Naphthol Hexylphenyl, Heptylphenol, Octylphenol, Nonylphenol, Isononylphenol, Undecylphenol, Dodecylphenol, Di- und Tributylphenol und Dinonylphenol genannt.

Geeignete aliphatische Amine entsprechen den obengenannten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt.

Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure.

Geeignete Carbonsäureamide leiten sich von diesen Carbonsäuren ab.

Neben den Alkylenoxidaddukten an die einwertigen Amine und Alkohole sind Alkylenoxidaddukte an mindestens bifunktionelle Amine und Alkohole als Edukte für die Veresterung und insbesondere auch ohne weitere Veresterung als nichtionische Additive (C) von Interesse.

Als mindestens bifunktionelle Amine sind zwei- bis fünfwertige Amine bevorzugt, die insbesondere der Formel H₂N-(R-NR¹)ₙ-H (R: C₂-C₆-Alkylen; R¹: Wasserstoff oder C₁-C₆-Alkyl; n: 1 bis 5) entsprechen. Im einzelnen seien beispielhaft genannt: Ethylendiamin, Diethylentriamin, Triethylentetramin, Tetraethylenpentamin, Propylendiamin-1.3, Dipropylentriamin, 3-Amino-1-ethylenaminopropan, Hexamethylendiamin, Dihexamethylentriamin, 1,6-Bis-(3-aminopropylamino)hexan und N-Methyldipropylentriamin, wobei Hexamethylendiamin und Diethylentriamin besonders bevorzugt sind und Ethylendiamin ganz besonders bevorzugt ist.

Vorzugsweise werden diese Amine zunächst mit Propylenoxid und anschließend mit Ethylenoxid umgesetzt. Der Gehalt der Blockcopolymere an Ethylenoxid liegt üblicherweise bei etwa 10 bis 90 Gew.-%.

Die Blockcopolymere auf Basis mehrwertiger Amine weisen in der Regel mittlere Molekulargewichte Mₙ von 1000 bis 40000, vorzugsweise 1500 bis 30000, auf.

Als mindestens bifunktionelle Alkohole sind zwei- bis fünfwertige Alkohole bevorzugt. Beispielsweise seien C₂-C₆-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit sowie Cyclohexan-1,2-diol und Zuckerderivate, wie Sorbitan und Isosorbit, genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymere an Ethylenoxid liegt üblicherweise bei 10 bis 90 Gew.-%.

Die Blockcopolymere auf Basis mehrwertiger Alkohole weisen im allgemeinen mittlere Molekulargewichte Mₙ von 1000 bis 20000, vorzugsweise 1000 bis 15000, auf.

Durch Umsetzung mit Phosphorsäure, Phosphorpentoxid und Phosphonsäure bzw. Schwefelsäure und Sulfonsäure werden die Alkoxylierungsprodukte in die Phosphorsäuremono- oder -diester und Phosphonsäureester bzw. die Schwefelsäuremonoester und Sulfonsäureester überführt. Diese sauren Ester liegen bevorzugt in Form wasserlöslicher Salze, insbesondere als Alkalimetallsalze, vor allem Natriumsalze, und Ammoniumsalze vor, sie können jedoch auch in Form der freien Säuren eingesetzt werden.

Bevorzugte Phosphate und Phosphonate leiten sich vor allem von alkoxylierten, insbesondere ethoxylierten, Fett- und Oxoalkoholen, Alkylphenolen, Fettaminen, Fettsäuren und Harzsäuren ab, bevorzugte Sulfate und Sulfonate basieren insbesondere auf alkoxylierten, vor allem ethoxylierten, Fettalkoholen, Alkylphenolen und Aminen, auch mehrwertigen Aminen.

Derartige anionische oberflächenaktive Additive sind bekannt und im Handel z.B. unter den Namen Crodafos^{®} (Croda), Rhodafac^{®} (Rhodia), Maphos^{®} (BASF), Texapon^{®} (Cognis), Empicol^{®} (Albright & Wilson), Matexil^{®} (ICI), Soprophor^{®} (Rhodia) und Lutensit^{®} (BASF) erhältlich.

Als Komponente (C) enthalten die erfindungsgemäßen Pigmentzubereitungen weiterhin mindestens ein nichtionisches oberflächenaktives Additiv auf der Basis von Polyethern. Geeignete Polyether sind dabei insbesondere die oben genannten Polyalkylenoxide und Alkylenoxidaddukte.

Derartige nichtionische oberflächenaktive Additive sind ebenfalls bekannt und im Handel z.B. unter den Namen Tetronic^{®} und Pluronic^{®} (BASF) erhältlich.

Die erfindungsgemäßen Pigmentzubereitungen enthalten 60 bis < 90 (insbesondere 89) Gew.-% der Komponente (A), > 10 (insbesondere 11) bis 40 Gew.-% der Komponente (B) und >0 bis < 30 (insbesondere 29) Gew.-% der Komponente (C).

Die Zusammensetzung der erfindungsgemäßen Pigmentzubereitungen liegt vorzugsweise bei 70 bis 88 Gew.-% des Pigments (A), 11 bis 29 Gew.-% des anionischen Additivs (B) und 1 bis 19 Gew.-% des nichtionischen Additivs (C).

Die erfindungsgemäßen Pigmentzubereitungen können vorteilhaft nach dem ebenfalls erfindungsgemäßen Herstellungsverfahren erhalten werden, indem man das Pigment (A) zunächst in wäßriger, zumindest einen Teil der Additive (B) und/oder (C) enthaltenden Suspension einer Naßzerkleinerung unterwirft und die Suspension dann, gegebenenfalls nach Zugabe der restlichen Menge Additiv (B) und/oder (C), trocknet.

Das Pigment (A) kann bei dem erfindungsgemäßen Verfahren als trockenes Pulver oder in Form eines Preßkuchens eingesetzt werden.

Bei dem eingesetzten Pigment (A) handelt es sich vorzugsweise um ein gefinishtes Produkt, d.h. die Primärkorngröße des Pigments ist bereits auf den für die Anwendung gewünschten Wert eingestellt. Dieser Pigmentfinish empfiehlt sich insbesondere bei organischen Pigmenten, da die bei der Pigmentsynthese anfallende Rohware in der Regel nicht direkt für die Anwendung geeignet ist. Bei anorganischen Pigmenten, z.B. bei Oxid- und Bismutvanadatpigmenten, kann die Einstellung der Primärkorngröße auch bei der Pigmentsynthese erfolgen, so daß die anfallenden Pigmentsuspensionen direkt beim erfindungsgemäßen Verfahren eingesetzt werden können.

Da das gefinishte Pigment (A) bei der Trocknung bzw. auf dem Filteraggregat üblicherweise wieder reagglomeriert, wird es in wäßriger Suspension einer Naßzerkleinerung, z.B. einer Mahlung in einer Rührwerkskugelmühle, unterzogen.

Bei der Naßzerkleinerung sollte zumindest ein Teil des in der fertigen Pigmentzubereitung enthaltenen Additivs (B,C) anwesend sein, vorzugsweise setzt man die gesamte Menge Additiv (B,C) vor der Naßzerkleinerung zu.

In Abhängigkeit von der gewählten Trocknungsart - Sprühgranulierung und Wirbelschichttrocknung, Sprühtrocknung, Trocknung im Schaufeltrockner, Eindampfen und anschließende Zerkleinerung - kann die Teilchengröße der erfindungsgemäßen Pigmentzubereitungen gezielt gesteuert werden.

Bei Sprüh- und Wirbelschichtgranulierung können grobteilige Granulate mit mittleren Korngrößen von 50 bis 5000 µm, insbesondere 100 bis 1000 µm, erhalten werden. Durch Sprühtrocknung werden üblicherweise Granulate mit mittleren Korngrößen < 20 µm erhalten. Feinteilige Zubereitungen können bei der Trocknung im Schaufeltrockner und beim Eindampfen mit anschließender Mahlung erhalten werden. Vorzugsweise liegen die erfindungsgemäßen Pigmentzubereitungen jedoch in Granulatform vor.

Die Sprühgranulierung führt man vorzugsweise in einem Sprühturm mit Einstoffdüse durch. Die Suspension wird hier in Form größerer Tropfen versprüht, wobei das Wasser verdampft. Die Additive schmelzen bei den Trocknungstemperaturen auf und führen so zur Bildung eines weitgehend kugelförmigen Granulats mit besonders glatter Oberfläche (BET-Werte von in der Regel ≤ 15 m²/g, insbesondere ≤ 10 m2/g).

Die Gaseintrittstemperatur im Sprühturm liegt im allgemeinen bei 180 bis 300°C, bevorzugt bei 150 bis 300°C. Die Gasaustrittstemperatur beträgt in der Regel 70 bis 150°C, vorzugsweise 70 bis 130°C.

Die Restfeuchte des erhaltenen Pigmentgranulats liegt bevorzugte bei < 2 Gew.-%.

Die erfindungsgemäßen Pigmentzubereitungen zeichnen sich bei der Anwendung durch ihre hervorragenden, den flüssigen Pigmentpräparationen vergleichbaren, koloristischen Eigenschaften, insbesondere ihre Farbstärke und Brillanz, ihren Farbton und ihr Deckvermögen, und vor allem durch ihr Stir-in-Verhalten aus, d.h. sie können mit sehr geringem Energieeintrag durch einfaches Einrühren oder Schütteln in den Anwendungsmedien verteilt werden. Dies gilt insbesondere für die grobteiligen Pigmentgranulate, die die bevorzugte Ausführungsform der erfindungsgemäßen Pigmentzubereitungen darstellen.

Im Vergleich zu flüssigen Pigmentpräparationen weisen die erfindungsgemäßen Pigmentzubereitungen zudem folgende Vorteile auf: Sie haben einen höheren Pigmentgehalt. Während flüssige Präparationen bei der Lagerung zu Viskositätsänderungen neigen und mit Konservierungsmitteln und Mitteln zur Erhöhung der Gefrier- und/oder Eintrocknungsbeständigkeit versetzt werden müssen, zeigen die erfindungsgemäßen Pigmentzubereitungen sehr gute Lagerstabilität. Sie sind hinsichtlich Verpackung, Lagerung und Transport wirtschaftlich und ökologisch vorteilhaft. Da sie lösungsmittelfrei sind, weisen sie höhere Flexibilität in der Anwendung auf.

Die erfindungsgemäßen Pigmentzubereitungen in Granulatform zeichnen sich durch ausgezeichnete Abriebfestigkeit, geringe Kompaktierungs- bzw. Verklumpungsneigung, gleichmäßige Kornverteilung, gute Schütt-, Riesel- und Dosierfähigkeit sowie Staubfreiheit bei Handling und Applikation aus.

Die erfindungsgemäßen Pigmentzubereitungen eignen sich hervorragend zur Einfärbung von hochmolekularen organischen und anorganischen Materialien jeglicher Art. Flüssige Anwendungsmedien können dabei auch rein wäßrig sein, Mischungen von Wasser und organischen Lösungsmitteln, z.B. Alkoholen, enthalten oder nur auf organischen Lösungsmitteln, wie Alkoholen, Glykolethern, Ketonen, z.B. Methylethylketon, Amiden, z.B. N-Methylpyrrolidon und Dimethylformamid, Estern, z.B. Essigsäureethyl- und -butylester und Methoxypropylacetat, aromatischen oder aliphatischen Kohlenwasserstoffen, z.B. Xylol, Mineralöl und Benzin, basieren.

Gewünschtenfalls können die Zubereitungen zunächst in ein mit dem jeweiligen Anwendungsmedium verträgliches Lösungsmittel eingerührt werden, was wiederum mit sehr geringem Energieeintrag möglich ist, und dann in dieses Anwendungsmedium eingetragen werden. So können z.B. Aufschlämmungen von Pigmentzubereitungen in Glykolen oder sonstigen in der Lackindustrie üblichen Lösungsmitteln, wie Methoxypropylacetat, verwendet werden, um auf wäßrige Systeme abgestimmte Pigmentzubereitungen mit kohlenwasserstoffbasierenden Systemen oder Systemen auf Nitrocellulosebasis verträglich zu machen.

Als Beispiele für Materialien, die mit den erfindungsgemäßen Pigmentzubereitungen eingefärbt werden können, seien genannt: Lacke, z.B. Bautenlacke, Industrielacke, Fahrzeuglacke, strahlungshärtbare Lacke; Anstrichmittel, sowohl für den Bautenaußen- als auch -innenbereich, z.B. Holzanstrichmittel, Kalkfarben, Leimfarben, Dispersionsfarben; Druckfarben, z.B. Offsetdruckfarben, Flexodruckfarben, Toluoltiefdruckfarben, Textildruckfarben, strahlungshärtbare Druckfarben; Tinten, auch Ink-Jet-Tinten; Colorfilter; Baustoffe (üblicherweise wird erst nach trockenem Vermischen von Baustoff und Pigmentzubereitung Wasser zugesetzt), z.B. Silikatputzsysteme, Zement, Beton, Mörtel, Gips; Asphalt, Dichtungsmassen; cellulosehaltige Materialien, z.B. Papier, Pappe, Karton, Holz und Holzwerkstoffe, die lackiert oder anderweitig beschichtet sein können; Klebstoffe; filmbildende polymere Schutzkolloide, wie sie beispielsweise in der Pharmaindustrie verwendet werden; kosmetische Artikel; Detergentien.

Besonders vorteilhaft können die erfindungsgemäßen Pigmentzubereitungen als Mischkomponenten in Farbmisch- oder Abtönsystemen eingesetzt werden. Aufgrund ihres Stir-in-Verhaltens können sie dabei direkt als Feststoff zum Einsatz kommen. Gewünschtenfalls können sie jedoch auch zunächst in Basisfarben, Mischlacken und Abtönfarben (insbesondere in Farben mit hohem Feststoffgehalt, 'HS-Farben") oder noch höher pigmentierte Abtönpasten überführt werden, die dann die Komponenten des Mischsystems darstellen. Die Einstellung des gewünschten Farbtons und damit die Mischung der Farbkomponenten kann visuell über ein System von Farbkarten in möglichst vielen Farbtonabstufungen, die auf Farbstandards, wie RAL, BS und NCS, basieren, erfolgen oder bevorzugt computergesteuert vorgenommen werden, wodurch eine unbegrenzte Anzahl von Farbtönen zugänglich ist ("computer color matching").

### Beispiele

### Herstellung und Prüfung von erfindungsgemäßen Pigmentzubereitungen in Granulatform

Die Herstellung der Pigmentgranulate erfolgte, indem eine Suspension von x kg gefinishtem Pigment (A), y kg Additiv (B) und z kg Additiv (C) in 150 kg Wasser durch Zugabe von 25 gew.-%iger Natronlauge auf einen pH-Wert von 7 eingestellt, in einer Kugelmühle auf einen d₅₀-Wert von < 1 µm gemahlen und dann in einem Sprühturm mit Einstoffdüse (Gaseintrittstemperatur 165°C, Gasaustrittstemperatur 70°C) sprühgranuliert wurde.

Die Bestimmung der Farbstärke der Pigmentgranulate erfolgte farbmetrisch in der Weißaufhellung. (Angabe der Färbeäquivalente FAE, DIN 55986) in einer wasserbasierenden Dispersionsfarbe. Dazu wurde eine Mischung von jeweils 1,25 g Pigmentgranulat und 50 g eines wasserbasierenden Prüfbinders auf Styrol/Acrylatbasis mit einem Weißpigmentgehalt von 16,4 Gew.-% (TiO₂, Kronos 2043) (Prüfbinder 00-1067, BASF) in einem 150 ml-Kunststoffbecher mit einem Schnellrührer 3 min bei 1500 U/min homogenisiert. Die erhaltene Farbe wurde dann mit einer 100 m-Spiralrakel auf schwarz/weißen Prüfkarton aufgezogen und 30 min getrocknet.

Den jeweils analogen Dispersionsfarben, die mit handelsüblichen wäßrigen Präparationen der Pigmente hergestellt wurden, wurde der FAE-Wert 100 (Standard) zugeordnet. FAE-Werte < 100 bedeuten eine höhere Farbstärke als beim Standard, FAE-Werte > 100 entsprechend eine kleinere Farbstärke.

In der folgenden Tabelle sind die Zusammensetzungen der hergestellten Pigmentgranulate sowie die jeweils erhaltenen FAE-Werte aufgeführt. Als Additive (B) und (C) wurden eingesetzt:
B1: Saurer Phosphorsäureester auf Basis von ethoxyliertem C₈-C₁₀)-Oxoalkohol (6 mol EO/mol Alkohol)
B2: Saurer Schwefelsäureester auf Basis von ethoxyliertem C₁₆-C₁₈-Fettalkohol (3 mol EO/mol Alkohol)
C: Propylenoxid/Ethylenoxid/Blockcopolymer mit zentralem Polypropylenoxidblock, einem Ethylenoxidgehalt von 50 Gew.-% und einem mittleren Molekulargewicht Mₙ von 6500

**Tabelle**

| Bsp | Pigment | | Additiv | | Additiv (C) | FAE |
|---|---|---|---|---|---|---|
| | (A) | x kg | (B) | y kg | z kg | |
| 1 | P.Y. 74 | 75 | B1 | 25 | - | 101 |
| 2* | P.Y. 74 | 70 | B1 | 15 | 15 | 98 |
| 3 | P.Y. 138 | 75 | B1 | 25 | - | 98 |
| 4 | P.Y. 138 | 75 | B2 | 25 | - | 102 |
| 5* | P.Y. 138 | 70 | B1 | 15 | 15 | 99 |
| 6* | P.Y. 138 | 75 | B1 | 20 | 5 | 102 |
| 7 | P.B. 15:3 | 75 | B1 | 25 | - | 100 |
| 8 | P.B. 15:3 | 80 | B2 | 20 | - | 100 |
| 9* | P.B. 15:3 | 75 | B1 | 20 | 5 | 102 |
| 10 | P.G. 7 | 75 | B1 | 25 | - | 102 |
| 11 | P.G. 7 | 75 | B2 | 25 | - | 101 |
| 12* | P.G. 7 | 75 | B1 | 11 | 14 | 100 |
| 13 | P.Bk. 7 | 75 | B1 | 25 | - | 103 |

| | | | | | | |
|---|---|---|---|---|---|---|
| * erfindungsgemäß | | | | | | |

## Patentansprüche

1. Feste Pigmentzubereitungen in Form von Granulaten mit einer mittleren Korngröße von 50 bis 5000 µm, enthaltend als wesentliche Bestandteile
(A) 60 bis < 90 Gew.-% mindestens eines Pigments,
(B) > 10 bis 40 Ges.-% mindestens eines anionischen oberflächenaktiven Additivs auf der Basis von sauren Phosphorsäure-, Phosphonsäure-, Schwefelsäure- und/oder Sulfonsäureestern von Polyalkylenoxiden oder von Umsetzungsprodukten von Alkylenoxiden mit aliphatischen Alkoholen, Phenol oder Naphthol, das jeweils gewünschtenfalls alkylsubstituiert sein kann, mit aliphatischen oder aromatischen Aminen, aliphatischen Carbonsäuren oder Carbonsäureamiden oder den Satzen dieser Ester, wobei der Anteil des phosphorhaltigen Additivs in einem Gemisch von phosphor- und schwefelhaltigen Additiven mindestens 50 Gew.-% beträgt, und
(C) >0 bis < 30 Gew.-% mindestens eines nichtionischen oberflächenaktiven Additivs auf der Basis von Polyethern.

2. Pigmentzubereitungen nach Anspruch 1, die 70 bis 88 Gew.-% der Komponente (A), 11 bis 29 Gew.-% der Komponente (B) und 1 bis 19 Gew.-% der Komponente (C) enthalten.

3. Pigmentzubereitungen nach Anspruch 1 oder 2, die in Form von Granulaten mit einer BET-Oberfläche von ≤ 15 m²/g vorliegen.

4. Verfahren zur Herstellung von Pigmentzubereitungen gemäß den Ansprüchen 1 bis 3, **dadurch gekennzeichnet, daß** man das Pigment (A) zunächst in wäßriger, zumindest einen Teil der Additive (B) und/oder (C) enthaltender Suspension einer Naßzerkleinerung unterwirft und die Suspension dann, gegebenenfalls nach Zugabe der restlichen Menge Additiv (B) und/oder (C), trocknet.

5. Verfahren zur Einfärbung von hochmolekularen organischen und anorganischen Materialen, **dadurch gekennzeichnet, daß** man Pigmentzubereitungen gemäß den Ansprüchen 1 bis 3 durch Einrühren oder Schütteln in diese Materialien einträgt.

6. Verfahren nach Anspruch 5, **dadurch gekennzeichnet, daß** man Lacke, Anstrichmittel, Druckfarben, Tinten und Beschichtungssysteme einfärbt, die als flüssige Phase Wasser, organische Lösungsmittel oder Mischungen von Wasser und organischen Lösungsmitteln enthalten.

7. Verfahren zur Einfärbung von hochmolekularen organischen und anorganischen Materialien unter Verwendung von Farbmischsystemen, **dadurch gekennzeichnet, daß** man Pigmentzubereitungen gemäß den Ansprüchen 1 bis 3 als Mischkomponenten einsetzt.

## Claims

1. Solid pigment preparations in the form of granules having an average particle size from 50 to 5000 µm, comprising as essential constituents
(A) from 60% to < 90% by weight of at least one pigment,
(B) > 10% to 40% by weight of at least one anionic surface-active additive based on acid phosphoric, phosphonic, sulfuric and/or sulfonic esters of polyalkylene oxides or of reaction products of alkylene oxides with aliphatic alcohols, with phenol or naphthol, which may each be alkyl substituted if desired, with aliphatic or aromatic amines or with aliphatic carboxylic acids or carboxamides or on salts thereof, the fraction of the phosphorus-containing additive in a mixture of phosphorus- and sulfur-containing additives being not less than 50% by weight, and
(C) > 0% to < 30% by weight of at least one nonionic surface-active additive based on polyethers.

2. Pigment preparations according to claim 1, comprising from 70% to 88% by weight of component (A), from 11% to 29% by weight of component (B) and from 1% to 19% by weight of component (C).

3. Pigment preparations according to claim 1 or 2, in the form of granules having a BET surface area of ≤ 15 m²/g.

4. A process for producing pigment preparations according to any of claims 1 to 3, which comprises wet-comminuting the pigment (A) in aqueous suspension in the presence of some or all of additive (B) and/or (C) and then drying the suspension, if appropriate after the rest of additive (B) and/or (C) has been added.

5. A process for pigmenting macromolecular organic and inorganic materials, which comprises incorporating the pigment preparations according to any of claims 1 to 3 into these materials by stirring or shaking.

6. The process according to claim 5, for pigmenting coatings, paints, inks, including printing inks, and finish systems where the liquid phase comprises water, organic solvent or mixtures of water and organic solvents.

7. A process for pigmenting macromolecular organic and inorganic materials using color-mixing systems, which comprises using pigment preparations according to any of claims 1 to 3 as mixing components.

## Revendications

1. Compositions pigmentaires solides sous la forme de produits de granulation avec une taille moyenne des grains de 50 à 5000 µm, contenant, comme composants essentiels,
(A) 60 à <90 % en poids d'au moins un pigment,
(B) >10 jusqu'à 40 % en poids d'au moins un additif tensioactif anionique à base d'esters acides d'acide phosphorique, d'acide phosphonique, d'acide sulfurique et/ou d'acide sulfonique avec des oxydes de polyalkylène ou de produits réactionnels d'oxydes alkylène avec des alcools aliphatiques, du phénol ou du naphtol, qui peut être respectivement éventuellement substitué par de l'alkyle, avec des amines aliphatiques ou aromatiques, des acides carboxyliques aliphatiques ou des amides d'acide carboxylique ou des sels de ces esters, la fraction de l'additif contenant du phosphore dans un mélange d'additifs contenant du phosphore et du soufre étant au moins de 50 % en poids, et
(C) >0 à <30 % en poids d'au moins un additif tensioactif non ionique à base de polyéthers.

2. Compositions pigmentaires suivant la revendication 1, qui contiennent 70 à 88 % en poids du composant (A), 11 à 29 % en poids du composant (B) et 1 à 19 % en poids du composant (C).

3. Compositions pigmentaires suivant la revendication 1 ou 2, qui se présentent sous la forme de produits de granulation avec une surface BET de ≤15 m²/g.

4. Procédé de préparation de compositions pigmentaires suivant les revendications 1 à 3, **caractérisé en ce qu'**on soumet le pigment (A) tout d'abord à une fragmentation en milieu humide dans une suspension aqueuse contenant au moins une partie des additifs (B) et/ou (C) et on sèche alors la suspension, éventuellement après addition de la quantité restante d'additif (B) et/ou (C).

5. Procédé de coloration de matières organiques et inorganiques de haut poids moléculaire, **caractérisé en ce qu'**on introduit des compositions pigmentaires suivant les revendications 1 à 3 par délayage ou secouage dans ces matières.

6. Procédé suivant la revendication 5, **caractérisé en ce qu'**on colore des vernis, des peintures, des encres d'impression, des encres et des systèmes de revêtement qui, comme phase liquide, contiennent de l'eau, des solvants organiques ou des mélanges d'eau et de solvants organiques.

7. Procédé de coloration de matières organiques et inorganiques de haut poids moléculaire, par utilisation de systèmes de mélange de couleurs, **caractérisé en ce qu'**on met en oeuvre des compositions pigmentaires suivant les revendications 1 à 3, comme composants de mélange.
